# EUROPÄISCHE PATENTANMELDUNG

(11) **EP 1 972 472 A1**
(43) Veröffentlichungstag der Anmeldung: **24.09.2008**
(21) Anmeldenummer: 08003067.9
(22) Anmeldetag: 20.02.2008
(51) Int. Cl.: B60H 1/00, F16K 15/14

(54) **Klappenanordnung für eine Kraftfahrzeug-Klimaanlage**

(30) Priorität: 20.03.2007 DE 102007013869
(71) Anmelder: Behr GmbH & Co. KG, 70469 Stuttgart (DE)
(72) Erfinder: Engelhardt, Martin, 71696 Möglingen (DE); Schaudt, Jochen, 72379 Hechingen (DE)

(57) **Zusammenfassung**

Die Erfindung betrifft eine Klappenanordnung, insbesondere für eine Kraftfahrzeug-Klimaanlage, mit einem elastisch ausgebildeten Teil (11), welcher mehrere Klappenbereiche (16) bildet und mindestens einem Stützteil (12,13) anliegend angeordnet ist, und einem Träger, an welchem der elastisch ausgebildete Teil derart angebracht ist, dass eine im Träger ausgebildete Öffnung durch den Klappenbereich (16) verschließbar und freigebbar ist.

## Beschreibung

Die Erfindung betrifft eine Klappenanordnung gemäß dem Oberbegriff des Anspruches 1.

Aus der EP 0 645 268 B1 ist ein Klappen-Druckbegrenzungsventil mit einem Rahmen mit gegenüberliegenden Seitenflächen, der eine Durchflussöffnung aufweist, ein Ventilelement in Form einer flexiblen Bahn, die aus einem Material mit einer ersten Kante besteht und an dem Rahmen entlang einer ersten Seite der Durchflussöffnung so befestigt ist, dass sie die Durchflussöffnung überdeckt, und Verbindungsmittel zur Befestigung der flexiblen Bahn am Rahmen, bestehend aus mindestens einer Verbindungsöffnung durch den Rahmen entlang der ersten Seite der Durchflussöffnung und einem Streifenelement an der ersten Kante der Bahn, das sich durch die Verbindungsöffnung hindurch erstreckt, bekannt, wobei das Streifenelement aus einem federnden und zusammendrückbaren elastomeren Material besteht und vergrößerte erste und zweite Bereiche aufweist, die sich um die Verbindungsöffnung auf beiden Seitenflächen des Rahmens nach außen erstrecken. Hierbei ist ein Verbindungsbereich zwischen dem ersten und zweiten Bereich vorgesehen, wobei der Verbindungsbereich sich innerhalb der Verbindungsöffnung befindet. Der Verbindungsbereich ist in der Verbindungsöffnung unter Druck, füllt die Verbindungsöffnung vollständig aus und ist mit dem Rahmen unter Druck in Eingriff. Ferner ist das Streifenelement koplanar zu der flexiblen Bahn. Das Streifenelement und die flexible Bahn können einstückig ausgebildet sein. Mehrere Streifenelemente können entlang der ersten Kante der Bahn vorgesehen sein. Die EP 0 645 268 B1 offenbart ferner die Anordnung mehrerer parallel zueinander verlaufender Bahnen in einem entsprechend mit Stegen ausgebildeten Rahmen.

Derartige Klappenanordnungen lassen noch Wünsche offen.

Es ist Aufgabe der Erfindung, eine verbesserte Klappenanordnung zur Verfügung zu stellen. Insbesondere soll eine einfache Herstellung und Montage möglich sein.

Diese Aufgabe wird gelöst durch eine Klappenanordnung mit den Merkmalen des Anspruchs 1. Vorteilhafte Ausgestaltungen sind Gegenstand der Unteransprüche.

Erfindungsgemäß ist eine Klappenanordnung, insbesondere für eine Kraftfahrzeug-Klimaanlage vorgesehen, mit einem elastisch ausgebildeten Teil, welcher einen Klappenbereich bildet, und einem Träger, an welchem der elastisch ausgebildete Teil derart angebracht ist, dass eine im Träger ausgebildete Öffnung durch den Klappenbereich verschließbar und freigebbar ist, wobei der elastisch ausgebildete Teil, welcher mindestens zwei Klappenbereiche bildet, an mindestens einem Stützteil anliegend angeordnet ist. Dadurch, dass mehrere Klappenbereiche einstückig ausgebildet sind, vereinfacht sich die Herstellung und insbesondere die Montage der entsprechenden Klappenanordnung. Durch die Anlage auf mindestens einer Seite lässt sich zudem auf einfache Weise die Schließstellung definieren. In Folge der elastischen Ausbildung des entsprechenden Klappenbereichs ist zudem eine ausreichende Abdichtung bei Anlage an die Anlagefläche des Stützteils gewährleistet, d.h. ein unerwünschtes Rückströmen von Luft kann ausgeschlossen werden. Prinzipiell kann eine entsprechende Klappenanordnung auch für andere Medien als Luft, beispielsweise für Flüssigkeiten, verwendet werden, jedoch ist die Verwendung für Luft bevorzugt. Ebenfalls sind andere Verwendungszecke als Kraftfahrzeug-Klimaanlagen möglich. Beispielsweise ist die Verwendung in Verbindung mit einem Ventilator möglich, um ein Rückströmen von nach außen abgeführter Luft, beispielsweise von einer Luftabzugshaube kommend, zu verhindern.

Der elastisch ausgebildete Teil ist insbesondere bevorzugt derart ausgebildet, dass er - im Falle mehrzoniger Klimaanlagen - sich über mehrere Klimazonen, insbesondere bevorzugt über alle Klimazonen, hinweg erstreckt, wobei in dem Teil in jeder Klimazone mindestens ein Klappenbereich vorgesehen ist.

Der elastisch ausgebildete Teil ist vorzugsweise zwischen zwei Stützteilen eingeklemmt angeordnet. Hierbei sind die Stützteile bevorzugt getrennt voneinander ausgebildet, jedoch ist prinzipiell auch eine einstückige Ausgestaltung mit einem Filmscharnierbereich, um den ein Bereich relativ zum anderen verschwenkbar ist, wobei das elastische Teil zwischen den beiden Bereichen eingeklemmt wird, möglich. Die Fixierung des elastischen Teils erfolgt bevorzugt rein mechanisch, jedoch kann prinzipiell auch eine andere Fixierung - ggf. in Verbindung mit einer mechanischen Fixierung - vorgesehen sein, beispielsweise eine Klebeverbindung.

Das oder die Stützteile sind vorzugsweise durch gitterartige Elemente gebildet, wobei auch nur ein Teilbereich gitterartig ausgebildet sein kann. Die Öffnungen zwischen den Stegen, welche das Gitter bilden, dienen hierbei dem Luftdurchlass und sie sind durch die Klappenbereiche des elastischen Teils verschließbar.

Insbesondere bevorzugt ist in eines der Stützteile ein Teil einer Luftleitstruktur integriert. Dies verringert die erforderliche Teilezahl und dadurch den Montageaufwand.

Bevorzugt ist zumindest eines der Stützteile, insbesondere bevorzugt beide der Stützteile, als Kunststoff-Spritzgussteii ausgebildet. Derartige Teile sind kostengünstig herstellbar.

Das elastisch ausgebildete Teil besteht vorzugsweise aus Silikon. lnsbesondere bevorzugt besteht das Teil jedoch aus einem schlecht wärmeleitenden Material, welches eine ausreichende Flexibilität aufweist, um ein Öffnen bei ausreichendem Druck zu ermöglichen.

Bevorzugt weist das elastisch ausgebildete Teil eine im Wesentlichen konstante Dicke auf. Die Dicke hängt von der Elastizität des Teils ab, beträgt jedoch bevorzugt 0,1 bis 1 mm, insbesondere bevorzugt 0,2 bis 0,5 mm und ganz besonders bevorzugt 0,3 mm +/- 0,1 mm. Prinzipiell ist jedoch auch eine gewisse Materialschwächung im Bereich der Achsen, um welche die Klappenbereiche schwenken, möglich.

Das elastische Teil ist insbesondere bevorzugt vollständig eben ausgebildet.

Das elastisch ausgebildete Teil weist bevorzugt zur Bildung von Klappenbereichen mindestens zwei Ausschnitte oder Aussparungen auf, welche durch drei miteinander verbundene, in einem rechten Winkel zueinander Bereiche gebildet ist, wobei die seitlichen Bereiche gleich lang ausgebildet sind. Die Ecken zwischen zwei benachbarten Bereichen sind aus herstellungstechnischen Gründen bevorzugt abgerundet ausgebildet. Insbesondere bevorzugt sind die Enden der Ausschnitte oder Aussparungen abgerundet, insbesondere kreisförmig erweitert, ausgebildet, um ein Reißen in diesem Bereich des elastischen Teils zu verhindern.

Besonders bevorzugt sind mindestens vier, insbesondere bevorzugt sechzehn, Klappenbereiche vorgesehen. Die Anordnung der Klappenbereiche erfolgt vorzugsweise in Reihen und Spalten, wobei insbesondere bevorzugt vier Reihen und vier Spalten vorgesehen sind.

Vorzugsweise ist jeder der Klappenbereiche derart angeordnet, dass die Achse, um welche die Klappenbereiche beweglich sind, im obersten Bereich angeordnet ist.

Eine derartige Klappenanordnung ist vorzugsweise in einer Kraftfahrzeug-Klimaanlage mit einem Verdampfer, einem Heizer, einem Bypass um den Heizer und einem in Strömungsrichtung der Luft hinter dem Heizer angeordneten Mischbereich angeordnet, wobei sie luftabströmseitig des Heizers angeordnet ist, und dazu dient, ein Rückströmen von temperierter Luft in den Wärmetauschbereich des Heizers zu verhindern.

Bevorzugt sind der Heizer und die Klappenanordnung parallel zueinander angeordnet, und der Heizer ist vertikal im Fahrzeug angeordnet oder mit seiner oberen Kante entgegen der Luftströmungsrichtung geneigt, wobei der Neigungswinkel 0° bis 45°, insbesondere 10° bis 30° und besonders bevorzugt ca. 15°, beträgt.

Um die (Vor-)Montage der Klappenanordnung zu vereinfachen, ist vorzugsweise im Bereich des oberen Drittels der Klappenanordnung mindestens eine Positionierungshilfe für das elastische Teil relativ zu dem oder den Stützteilen vorgesehen.

Im Folgenden wird die Erfindung anhand eines Ausführungsbeispiels unter Bezugnahme auf die Zeichnung im Einzelnen erläutert. Es zeigen:
- Fig. 1: eine Schnittdarstellung einer Kraftfahrzeug-Klimaanlage mit einer Klappenanordnung gemäß dem Ausführungsbeispiel,

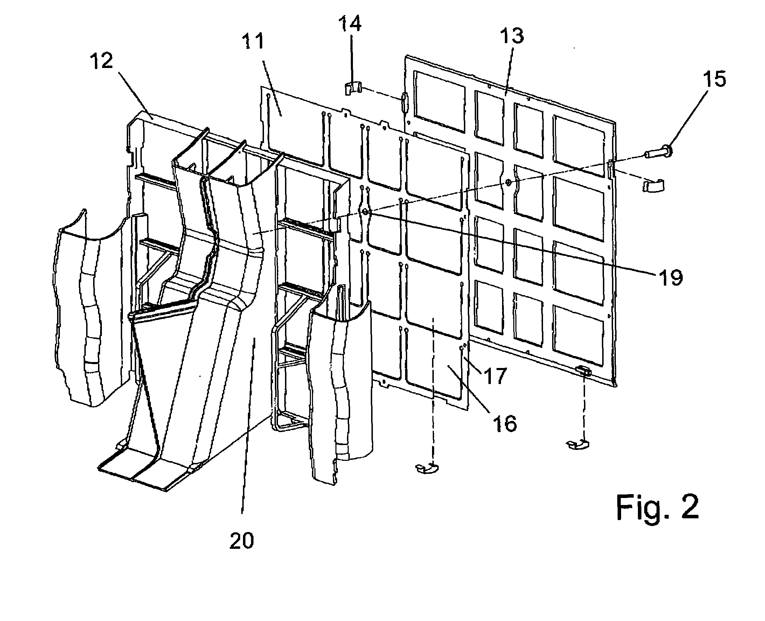

- Fig. 2: eine Explosionsdarstellung der Klappenanordnung von Fig. 1,
- Fig. 3: eine Draufsicht auf den die Klappen bildenden, zentralen Teil der Klappenanordnung,

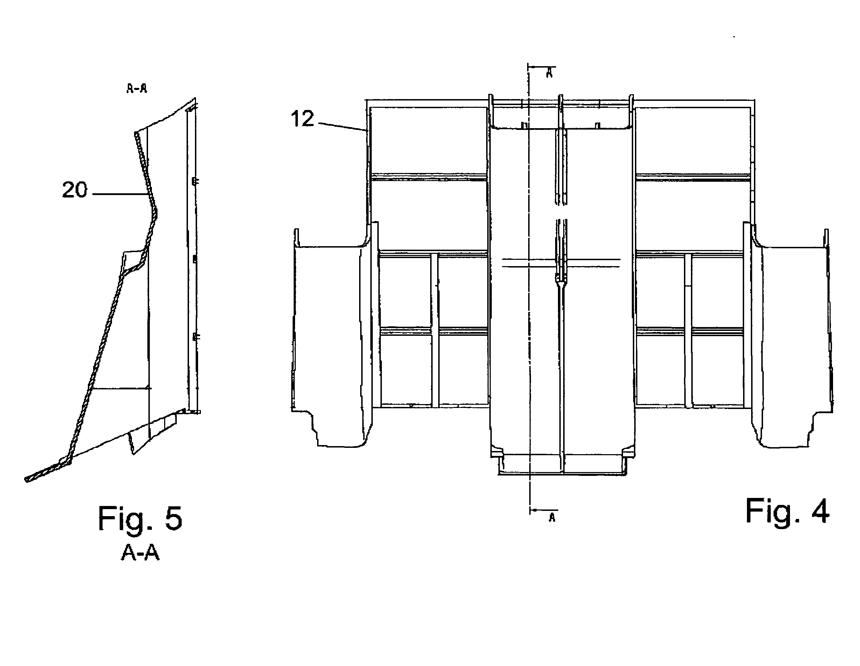

- Fig. 4: eine Ansicht entgegen der normalen Luftströmungsrichtung auf einen zweiten Teil der Klappenanordnung gemäß dem Ausführungsbeispiel,
- Fig. 5: einen Schnitt durch Fig. 4 entlang Linie A-A,

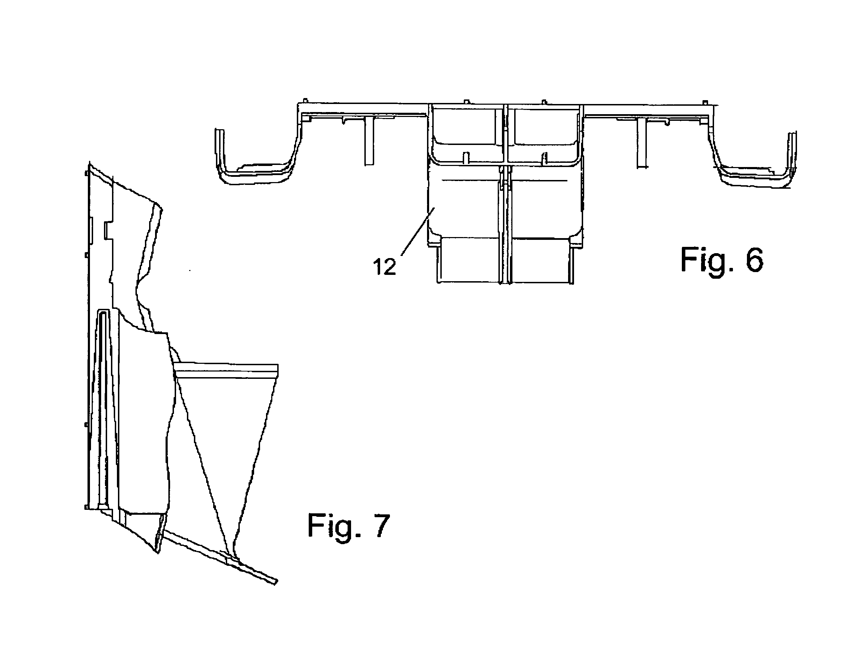

- Fig. 6: eine Ansicht auf den Teil der Klappenanordnung von Fig. 4 von oben,
- Fig. 7: eine Seitenansicht auf den Teil der Klappenanordnung von Fig. 4,

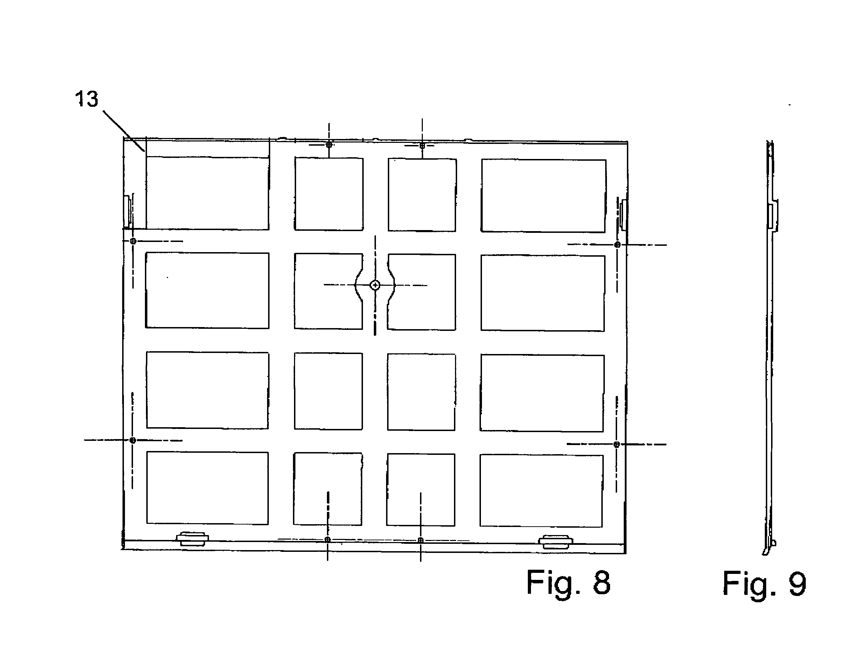

- Fig. 8: eine Frontansicht auf den dritten Teil der Klappenanordnung, und
- Fig. 9: eine Seitenansicht auf den dritten Teil der Klappenanordnung.

Eine Kraftfahrzeug-Klimaanlage 1 gemäß dem Ausführungsbeispiel weist in einem Luftführungsgehäuse 2 angeordnet einen Verdampfer 3, einen Heizer 4 sowie verschiedene Klappen auf, welche den Luftstrom vom Verdampfer 3 in Richtung Mischraum 5 durch den Heizer 4 und/oder den Bypass zum Heizer 4 regeln. So ist vor dem Heizer eine Mehrzahl von Warmluftklappen 6 und im Bypass eine Kaltluftklappe 7 vorgesehen. Vom Mischraum 5 kann die temperierte Luft, geregelt mittels weiterer Klappen der Frontscheibe (Defrostbetrieb, Klappe 8), der Seitendüse (Belüftung, Klappe 9) und oder dem Fußraum (nicht dargestellt) zugeführt werden. Vorliegend handelt es sich bei der Klimaanlage um eine mehrzonige Klimaanlage. Um eine ungewollte Erwärmung der Luft des Mischraums 5 durch den benachbarten Heizer 4 bei geschlossenen Warmluftklappen zu verhindern, ist eine Rückschlagklappenanordnung 10, im Folgenden als Klappenanordnung bezeichnet, vorgesehen, auf welche im Folgenden genauer eingegangen wird.

Die Klappenanordnung 10 ist vorliegend dreiteilig ausgebildet, nämlich aus einem zentral angeordneten, elastischen, vorliegend aus Silikon bestehenden Klappenteil 11, einem ersten Stützteil 12 und einem zweiten Stützteil 13. Vorliegend sind die beiden Stützteile 12 und 13 mittels Klammem 14 und einer zentralen Schraube 15 miteinander verbunden. Eine weitere Fixierung erfolgt im Rahmen der Endmontage mittels weiterer Schrauben. Hierbei ist vorliegend eine Fixierung am Luftführungsgehäuse 2 vorgesehen, jedoch ist auch eine Anbringung am Heizer denkbar.

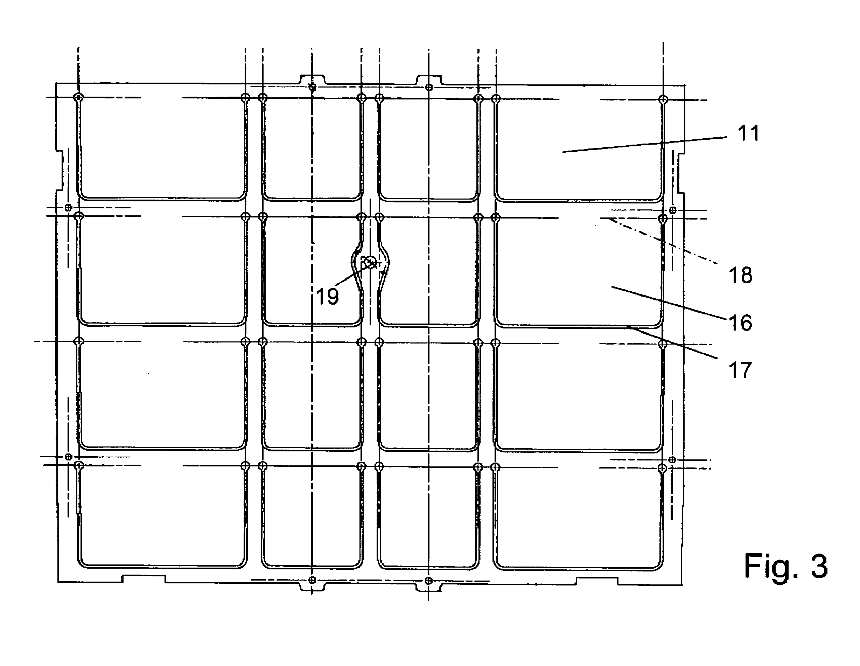

Das Klappenteil 11 weist eine im Wesentlichen rechteckige Gestalt mit im Wesentlichen konstanter Dicke von 0,3 mm auf. Für die Ausbildung von vorliegend sechzehn in vier Viererreihen angeordnete Klappenbereichen 16 sind Ausschnitte 17 vorgesehen, welche zwei parallele Bereiche und einen an einem Ende der parallelen Bereiche angeordneten, senkrecht zu denselben verlaufenden mittleren Bereich aufweisen. Das andere Ende der parallelen Bereiche ist kreisförmig erweitert ausgebildet, um eine Rissbildung zu vermeiden. Der Kreisdurchmesser beträgt hierbei etwa das Doppelte der Ausschnittsbreite. Auf den Bereich zwischen zwei kreisförmigen Erweiterungen eines Ausschnitts 17 wird im Folgenden auch als Achse 18 Bezug genommen, da um diese Achse der entsprechende Klappenbereich 16 mittels Biegens auslenkbar ist. Die Klappenbereiche 16 weisen zwei unterschiedliche Größen auf, wobei die Höhe jeweils gleich ist, lediglich die Breite, d.h. die Länge des mittleren Bereichs und der Achse 18 unterscheidet sich. Hierbei sind die Klappenbereiche 16 beiden mittleren Spalten (siehe Fig. 3) kleiner als die äußeren Klappenbereiche 16 ausgebildet. Zwischen den einzelnen Klappenbereichen 16 verlaufen, begrenzt durch die Ausschnitte 17 und die Achsen 18, Stege, die zwischen den beiden Stützteilen 12, 13 eingeklemmt sind. Das Klappenteil 11 ist - einschließlich der Ausbildung der Ausschnitte 17 - vorliegend in einem Arbeitsgang mittels Stanzen aus einer entsprechenden Folienplatte ausgebildet.

Um eine relativ zentrale Positionierung und Fixierung des Klappenteils 11 zu ermöglichen, ist ferner in der Mitte in Breitenrichtung und am unteren Ende des oberen Drittels eine Öffnung 19 für das Durchstecken der Schraube 15 vorgesehen. Auf diese Öffnung 19 in Verbindung mit der Schraube 15 wird auch als Positionierungshilfe Bezug genommen, wobei im Falle einer reinen Positionierung auch ein Stift, ein an einem Stützteil ausgebildeter Vorsprung o.ä. an Stelle einer Schraube verwendet werden kann. Die Anordnung der Positionierungshilfe in einem etwas weiter oben angeordneten Bereich ist in Folge der Elastizität des elastischen Teils 11 hilfreich, da sich so die Handhabung etwas vereinfacht. Um den mittleren Steg des elastischen Teils 11, in welchem die Öffnung 19 angeordnet ist, nicht zu stark zu schwächen, sind die Ausschnitte 17 der benachbarten Klappenbereiche 16 kurvenförmig um die Öffnung 19 gekrümmt verlaufend ausgebildet.

Das (im Heizbetrieb) luftanströmseitige Stützteil 13 ist als einfache Gitterstruktur mit konstanter Dicke ausgebildet, wobei die Stege des Gitters entsprechend den Stegen des elastischen Teils 11 verlaufend angeordnet sind, jedoch die Stegbreiten etwas größer als die Stegbreiten des elastischen Teils 11 bemessen sind, so dass Anlageflächen für die Ränder der Klappenbereiche 16 ausgebildet sind, und ein Rückbiegen der Klappenbereiche 16, was mit einem Rückströmen von temperierter Luft in den Heizer 4 verbunden wäre, verhindert werden kann. Werden die Klappenbereiche 16 weg vom Stützteil 13 gebogen, so werden die zwischen den Stegen ausgebildeten Öffnungen freigegeben.

Das (im Heizbetrieb) luftabströmseitige Stützteil 12 ist im Wesentlichen durch eine entsprechende Gitterstruktur gebildet, jedoch sind die Stegbreiten derart bemessen, dass ein ungehindertes Öffnen der Klappenbereiche 16 möglich ist, d.h. die Stege sind schmäler als die Stege des elastischen Teils 11 ausgebildet. Um dennoch eine ausreichende Festigkeit des Stützteils 12 zu gewährleisten, sind die Stege dicker, rippenartig ausgebildet. Die rippenartige Ausgestaltung ermöglicht zudem eine gewisse Luftleitfunktion für die vom Heizer 4 kommende Luft. Die durch die Stege gebildeten Öffnungen fluchten mit den Öffnungen des luftanströmseitigen Stützteils 13, sind jedoch etwas größer ausgebildet.

Um die Anzahl der erforderlichen Teile für das Klimaanlagengehäuse zu verringern, ist in das Stützteil 12 zudem eine Luftleitstruktur integriert, d.h. es sind die Anfangsbereiche von Luftkanälen ausgebildet, die vom Mischraum oder direkt ausgehend von hinter dem Heizer 4 zum Fahrzeuginnenraum führen. Insbesondere ist an zentraler Stelle der nach oben führende Defrostkanal, durch welchen bei Bedarf warme Luft zum Entfrosten der Scheiben geführt werden kann, angeordnet. Weitere Kanäle und/oder Trennwände für die Unterteilung in einzelne Zonen können in diesem Stützteil 12 ausgebildet sein.

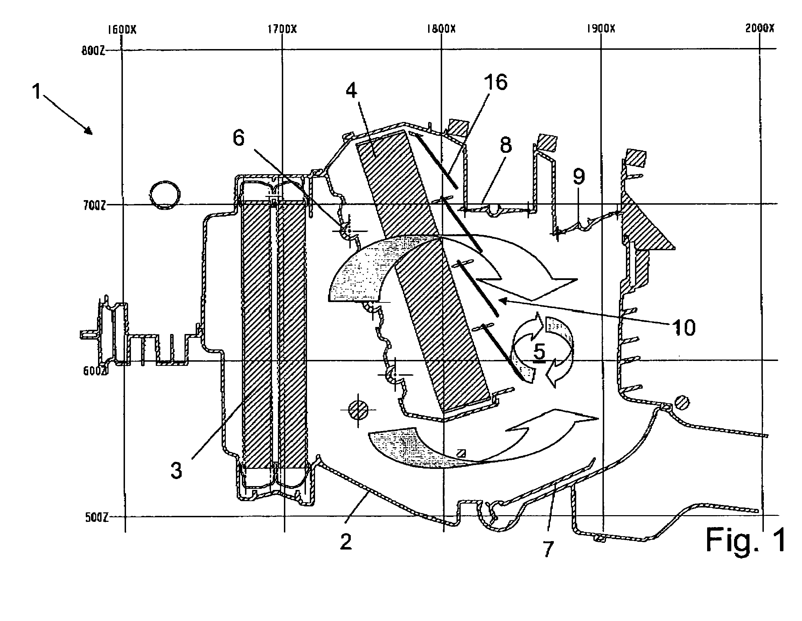

Wie aus Fig. 1 ersichtlich, sind der elastische Teil 11 und die beiden Stützteile 12, 13 parallel zum Heizer 4 gemäß dem vorliegenden Ausführungsbeispiel angeordnet, wobei der Heizer 4 mit seiner oberen Kante entgegen der Luftanströmrichtung geneigt ist, vorliegend in einem Winkel von ca. 15° zur Vertikalen (bei normaler horizontaler Positionierung des Kraftfahrzeugs).

Die Funktion der Klappenbereiche 16 ist hierbei Folgende: In einem Heizbetrieb ist der Druck der durch den Heizer 4 strömenden Luft größer als der Druck im Mischraum 5, so dass die Klappenbereiche 16 entgegen der Schwerkraft und der elastischen Kraft des Materials des elastischen Teils geöffnet werden, so dass warme Luft in den Mischraum 5 strömt. Wird jedoch der Heizer 4 durch die Warmluftklappen 6 abgesperrt, so sinkt der Differenzdruck zwischen dem wärmeübertragenden Bereich des Heizers 4 und dem Mischraum 5, wodurch die Klappenbereiche 16 geschlossen gehalten werden und dadurch ein Rückströmen von kalter, vom Verdampfer 3 kommenden, über den Bypass am Heizer 4 vorbeigeführten Luft in den Heizer 4 verhindert und so eine unerwünschte Resterwärmung der Luft vermieden werden kann.

## Patentansprüche

1. Klappenanordnung, insbesondere für eine Kraflfahrzeug-Klimaanfage, mit einem elastisch ausgebildeten Teil (11), welcher einen Klappenbereich (16) bildet, und einem Träger, an welchem der elastisch ausgebildete Teil (11) derart angebracht ist, dass eine im Träger ausgebildete Öffnung durch den Klappenbereich (16) verschließbar und freigebbar ist, **dadurch gekennzeichnet, dass** der elastisch ausgebildete Teil (91), welcher mindestens zwei Klappenbereiche (16) bildet, an mindestens einem einen Träger bildenden Stützteil (12, 13) anliegend angeordnet ist.

2. Klappenanordnung nach Anspruch 1, **dadurch gekennzeichnet, dass** der elastisch ausgebildete Teil zwischen zwei Stützteilen (12, 13) eingeklemmt angeordnet ist.

3. Klappenanordnung nach Anspruch 1 oder 2, **dadurch gekennzeichnet, dass** das oder die Stützteile (12, 13) durch gitterartige Elemente gebildet sind.

4. Klappenanordnung nach einem der vorhergehenden Ansprüche, **dadurch gekennzeichnet, dass** in eines der Stützteile (12) ein Teil einer Luftleitstruktur integriert ist.

5. Klappenanordnung nach einem der vorhergehenden Ansprüche, **dadurch gekennzeichnet, dass** zumindest eines der Stützteile (12, 13) als Kunststoff-Spritzgussteil ausgebildet ist.

6. Klappenanordnung nach einem der vorhergehenden Ansprüche, **dadurch gekennzeichnet, dass** das elastisch ausgebildete Teil (11) aus Silikon besteht.

7. Klappenanordnung nach einem der vorhergehenden Ansprüche, **dadurch gekennzeichnet, dass** das elastisch ausgebildete Teil (11) eine im Wesentlichen konstante Dicke aufweist.

8. Klappenanordnung nach einem der vorhergehenden Ansprüche, **dadurch gekennzeichnet, dass** das elastisch ausgebildete Teil (11) zur Bildung von Klappenbereichen (16) mindestens zwei Ausschnitte (17) oder Aussparungen aufweist, welche durch drei miteinander verbundene, in einem rechten Winkel zueinander Bereiche gebildet ist, wobei die seitlichen Bereiche gleich lang ausgebildet sind.

9. Klappenanordnung nach Anspruch 8, **dadurch gekennzeichnet, dass** die Enden der Ausschnitte (17) oder Aussparungen abgerundet, insbesondere kreisförmig erweitert, ausgebildet sind.

10. Klappenanordnung nach Anspruch 8 oder 9, **dadurch gekennzeichnet, dass** mindestens vier, insbesondere sechzehn, Klappenbereiche (16) vorgesehen sind.

11. Klappenanordnung nach einem der vorhergehenden Ansprüche, **dadurch gekennzeichnet, dass** jeder der Klappenbereiche (16) derart angeordnet ist, dass die Achse (18), um welche die Klappenbereiche (16) beweglich sind, im obersten Bereich angeordnet ist.

12. Kraftfahnzeug-Klimaanlage mit einem Verdampfer (3), einem Heizer (4), einem Bypass um den Heizer (4) und einem in Strömungsrichtung der Luft hinter dem Heizer (4) angeordneten Mischbereich (5), **dadurch gekennzeichnet, dass** eine Klappenanordnung (10) gemäß einem der vorhergehenden Ansprüche luftabströmseitig des Heizers (4) angeordnet ist, um ein Rückströmen von temperierter Luft in den Wärmetauschbereich des Heizers (4) zu verhindern.

13. Kraftfahrzeug-Klimaanlage nach Anspruch 12, **dadurch gekennzeichnet, dass** der Heizer (4) und die Klappenanordnung (10) parallel zueinander angeordnet sind, und dass der Heizer (4) vertikal im Fahrzeug angeordnet oder mit seiner oberen Kante entgegen der Luftströmungsrichtung geneigt ist, wobei der Neigungswinkel 0° bis 45°, insbesondere 10° bis 30°, beträgt.

14. Kraftfahrzeug-Klimaanlage nach Anspruch 12 oder 13, **dadurch gekennzeichnet, dass** im Bereich des oberen Drittels mindestens eine Positionierungshilfe (19, 15) für das elastische Teil (11) relativ zu dem oder den Stützteilen (12, 13) vorgesehen ist.
